# EUROPEAN PATENT APPLICATION

(11) **EP 2 846 323 A1**
(43) Date of publication of application: **11.03.2015**
(21) Application number: 12873984.4
(22) Date of filing: 12.04.2012
(51) Int. Cl.: G09B 9/02, G09B 9/12, A63B 26/00

(54) **STRUCTURE FOR A TRANSPORT VEHICLE SIMULATOR**

(71) Applicant: Virtual Fly, S.L., 08029 Barcelona (ES)
(72) Inventor: CASELLAS BASCOMPTE, Pere, E-08029 Barcelona (ES)
(74) Representative: Carpintero Lopez, Francisco
(86) International application number: PCT/ES2012/070245
(87) International publication number: WO 2013/153239

(57) **Abstract**

The invention relates to a structure E for a transport simulator, comprising: a first mobile mounting arranged such as to rotate relative to a horizontal axis E1, a second mobile mounting (2) arranged such as to rotate relative to an axis E2 and secured to the first mounting (1), and a simulation cabin (3) secured to the second mobile mounting (2) and disposed inside same. The structure also comprises an outer shell (4) secured to the second mounting (2), the first (1) and second (2) mountings being located at least partially between the simulation cabin (3) and the outer shell (4), such that the mobile structure cannot be seen from inside the cabin and cannot be accessed from the exterior, at least from the space through which people pass in order to access the cabin, all of the aforementioned parts occupying a minimum amount of space.

## Description

The present invention relates to an aerial, maritime or land transport vehicle piloting simulation structure having structural simplicity and providing maximum realism in minimal space, as well as assuring safety for those people passing by close to the structure, facilitating its professional, public and domestic use.

### Background of the Invention

Structures, especially for flight simulators, are known, said structures comprising a first mobile mounting arranged such as to rotate relative to a horizontal axis, a second mobile mounting arranged such as to rotate according to an axis and integral with the first mounting, and a simulation cabin integral with the second mobile mounting and arranged inside same.

An example of one such structure is described in US patent application US2010266994. Patent documents CN2292588, GB1528350 disclose similar structures differing only by the direction of the first drive axis.

These structures allow two or three degrees of freedom of rotation and are both for leisure and for pilot training.

However, the features of the devices described in these patent documents do not allow maximum realism, which is essential for training to be as beneficial as possible, and on the other hand they pose security problems which prevent them from being adaptable to any environment.

Specifically, the internal structure is seen in the simulation environment, i.e., in the cabin, and on the other hand, it is externally exposed, which can pose safety problems, especially in an environment intended for leisure.

Therefore, the inventors consider it necessary to provide a flight simulation structure that overcomes the aforementioned drawbacks.

### Description of the Invention

To that end, the present invention propose a structure for a transport simulator, and particularly a flight simulator, comprising a first mobile mounting arranged such as to rotate relative to a horizontal axis, a second mobile mounting arranged such as to rotate according to an axis and integral with the first mounting, and a simulation cabin integral with the second mobile mounting and arranged inside same, characterized by comprising an outer shell integral with the second mounting, the first mounting and second mounting being located at least partially between the simulation cabin and the outer shell.

The aforementioned drawbacks are thus resolved, because the mobile structure cannot be seen from inside the cabin and cannot be accessed from the exterior, at least from the space through which people pass in order to access the cabin, all of the aforementioned parts occupying a minimum amount of space.

Preferably, the center of gravity of the mobile part of the structure is at the intersection of the two axes, such that the need to allocate power to lift weight is prevented, while at the same time motor size is reduced.

More preferably, the structure comprises a supporting base, a supporting leg at one end of the base, said horizontal axis projecting from said leg at a determined height from the base, said first mounting being attached to said axis on one side of said axis, such that it is possible to access the simulation cabin from the side opposite the axis.

Advantageously, the structure comprises two rotary drive motors relative to each of the axes, the rotary motor relative to the horizontal axis being arranged in said supporting leg, and the two drive motors of the second axis being arranged between the outer shell and the simulation cabin.

The structure can advantageously comprise the following optional features:
- the length, width and height of the outer shell are comprised in the ranges of 2000 to 2100 mm, 1800 to 1900 mm and 1300 to 1400 mm, respectively.
- the length, width and height of the entire simulation structure are comprised in the ranges of 2050 to 2150 mm, 2400 to 2500 mm and 2050 to 2150 mm, respectively.

Very advantageously, the first mounting is fork-shaped, the leg of which is the horizontal axis, and the second mounting consists of two intersecting frames, the intersecting point of which is the second axis, such that a structure-free side free space allowing lateral access to the simulation cabin is configured.

The outer shell can completely or partially envelope the cabin, depending on the space surrounding the structure which can be accessed by users of the structure. If it is envisaged that the door for accessing the cabin is located on one side of the structure, then it may be sufficient to provide the shell only on the hemisphere corresponding to the side of the opening. If, in contrast, greater protection is envisaged, then the cabin shall be enveloped in its entirety.

Should the shell be a fully-enveloping shell, a vertical groove through which the first axis passes is envisaged such that it allows rotation of the assembly formed by the second mounting, the cabin and the outer shell.

Advantageously, the drive motors of the axes are DC motors.

Finally, the signal and power cables intended for the mobile part of the structure are channeled through the inside of the first drive axis.

### Brief Description of the Drawings

To better understand the previous description a set of drawings is attached in which a practical embodiment is schematically depicted by way of non-limiting example.
Figure 1 is a perspective view which allows seeing the general structure of the simulator.
Figure 2 is a plan view diagram that allows seeing the relationship between the outer shell, the cabin and the mobile mountings.
Figures 3 and 4 are two perspective views of the simulator structure of the invention.

### Description of a Preferred Embodiment

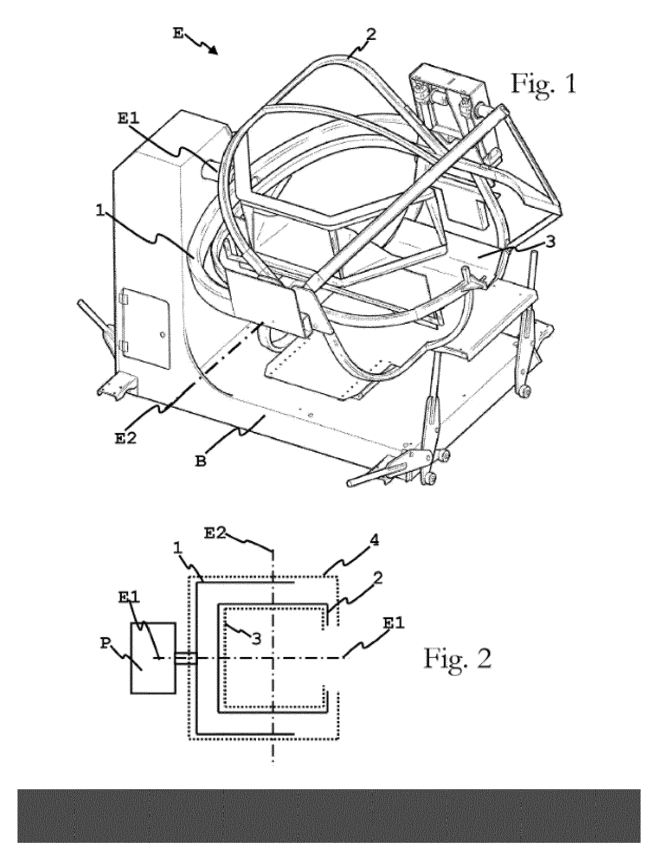

As can be seen in Figure 1, the invention relates to a structure E for a flight simulator, comprising a first mobile mounting 1 arranged such as to rotate relative to a horizontal axis E1, a second mobile mounting 2 arranged such as to rotate according to an axis E2 and integral with the first mounting 1, and a simulation cabin 3 integral with the second mobile mounting 2 and arranged inside same.

This known structure allows the rotation of the cabin according to two Euler axes, i.e., the first axis E1 allows pitch motion and the second axis E2 allows rolling motion.

Specifically, as can be seen in Figures 2, 3 and 4, the invention is characterized by comprising an outer shell 4 integral with the second mounting 2, the first mounting 1 and second mounting 2 being located at least partially between the simulation cabin 3 and the outer shell 4.

The center of gravity G of the mobile part of the structure is preferably at the intersection of the two axes E1, E2.

According to a first embodiment and as illustrated in Figure 1, the structure comprises a supporting base B and a supporting leg P at one end of the base B, said horizontal axis E1 projecting from said leg P at a determined height h from the base B, said first mounting 1 being attached to said axis on one side of said axis, such that it is possible to access the simulation cabin 3 from the side opposite the axis E1.

In this embodiment, two rotary drive motors relative to each of the axes are envisaged, the rotary motors being relative to the horizontal axis E1 being arranged in said supporting leg P, and the drive motors of the second axis E2 being arranged between the outer shell 4 and the simulation cabin 3.

According to another possible embodiment, the first mobile mounting could comprise an outer rolling surface supported on a plurality of drive rollers arranged at the base of the structure.

As dimensions, it is envisaged that the length, width and height of the outer shell 4 are comprised in the ranges of 2000 to 2100 mm, 1800 to 1900 mm and 1300 to 1400 mm, respectively, and that the length, width and height of the simulation cabin 3 are comprised in the ranges of 2050 to 2150 mm, 2400 to 2500 mm and 2050 to 2150 mm, respectively.

As can be seen in Figure 1, the first mounting is fork-shaped, the leg of which is the horizontal axis E1, and the second mounting consists of two intersecting frames, the intersecting point of which is the second axis E2, such that a structure-free side free space allowing lateral access to the simulation cabin is configured.

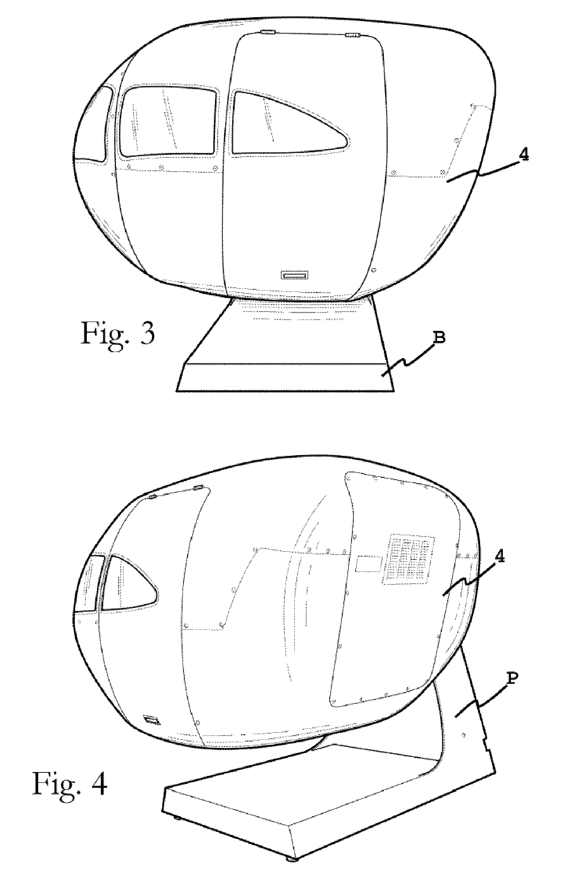

As can be seen in Figures 3 and 4, the outer shell 4 completely envelopes the cabin, although it can also be envisaged that it only partially envelops it, depending on concealment needs according to the space that can be accessed by the people passing around the structure.

The outer shell comprises a vertical groove V through which the first axis E1 passes such that it allows rotation of the assembly formed by the second mounting 2, the cabin and the outer shell 4.

Although the preferred application of the structure is for flight, it is obvious that it is also advantageously applicable to land, maritime or space transport simulators after making the necessary adjustments.

## Claims

1. Structure (E) for a transport simulator, comprising a first mobile mounting (1) arranged such as to rotate relative to a horizontal axis (E1), a second mobile mounting (2) arranged such as to rotate according to an axis (E2) and integral with the first mounting (1), and a simulation cabin (3) integral with the second mobile mounting (2) and arranged inside same, **characterized by** comprising an outer shell (4) integral with the second mounting (2), the first mounting (1) and second mounting (2) being located at least partially between the simulation cabin (3) and the outer shell (4).

2. Structure according to the preceding claim, wherein the center of gravity of the mobile part of the structure is at the intersection of the two axes (E1, E2).

3. Structure according to any of the preceding claims, comprising a supporting base (B) and a supporting leg (P) at one end of the base (B), said horizontal axis (E1) projecting from said leg (P) at a determined height from the base (B), said first mounting (1) being attached to said axis on one side of said axis, such that the simulation cabin (3) can be accessed from the side opposite the axis (E1).

4. Structure according to the preceding claim, comprising two rotary drive motors relative to each of the axes, the rotary motors relative to the horizontal axis (E1) being arranged in said supporting leg (P), and the drive motors of the second axis (E2) being arranged between the outer shell (4) and the simulation cabin (3).

5. Structure according to any of the preceding claims, wherein the length, width and height of the outer shell (4) are comprised in the ranges of 2000 to 2100 mm, 1800 to 1900 mm and 1300 to 1400 mm, respectively.

6. Structure according to any of the preceding claims, wherein the length, width and height of the entire structure are comprised in the ranges of 2050 to 2150 mm, 2400 to 2500 mm and 2050 to 2150 mm, respectively.

7. Structure according to any of the preceding claims, wherein the first mounting is fork-shaped, the leg of which is the horizontal axis (E1), and wherein the second mounting consists of two intersecting frames, the intersecting point of which is the second axis (E2), such that a structure-free side free space allowing lateral access to the simulation cabin is configured.

8. Structure according to any of the preceding claims, wherein the outer shell (4) completely envelopes the cabin.

9. Structure according to the preceding claim, wherein the outer shell comprises a vertical groove through which the first axis (E1) passes such that it allows rotation of the assembly formed by the second mounting (2), the cabin and the outer shell (4).

10. Structure according to any of the preceding claims, wherein the drive motors of the axes are DC motors.

11. Structure according to any of the preceding claims, wherein the signal and power cables intended for the mobile part of the structure are channeled through the inside of the first drive axis (E1).
